Europäisches Patentamt

European Patent Office

Office européen des brevets

(11) Veröffentlichungsnummer: **0 465 701 A1**

## (12) EUROPÄISCHE PATENTANMELDUNG

(21) Anmeldenummer: **90113227.4**

(22) Anmeldetag: **11.07.90**

(51) Int. Cl.5: **B01D 33/04**, E03F 5/14

(43) Veröffentlichungstag der Anmeldung:
**15.01.92 Patentblatt 92/03**

(84) Benannte Vertragsstaaten:
**AT BE DK ES GR SE**

(71) Anmelder: **E + M MASCHINENBAU GmbH**
**Postfach 3309, August-Mohl-Strasse 38**
**CH-8670 Hof / Saale(CH)**

(72) Erfinder: **Etschel, Helmut**
**Zobelsreutherstrasse 22**
**W-8670 Hof/Saale(DE)**
Erfinder: **Wirth, Hermann**
**Flechtnersberg 1**
**W-8670 Hof/Saale(DE)**

(74) Vertreter: **Reinhard, Skuhra, Weise**
**Friedrichstrasse 31**
**W-8000 München 40(DE)**

(54) **Abscheidevorrichtung, insbesondere für Kläranlagen.**

(57) Die Erfindung beschreibt eine Abscheidevorrichtung, insbesondere für Kläranlagen, mit einem umlaufenden Rechensieb (1) mit mehreren hintereinander geschalteten Rechensiebpartien (2-6), die jeweils bestehen aus nebeneinander angeordneten hakenförmigen Lamellen(16),

wobei jede Lamelle (16) einen von der vorderen Stirnkante abstehenden Hakenabschnitt (25) aufweist. Die Stärke jeder Lamelle (16) nimmt von der vorderen Stirnkante in Richtung auf die hintere Stirnkante ab.

Fig.1

EP 0 465 701 A1

Die Erfindung betrifft eine Abscheidevorrichtung, insbesondere für Kläranlagen, gemäß dem Oberbegriff des Patentanspruchs 1.

Die Erfindung bezieht sich auf eine Abscheidevorrichtung zur Abscheidung von Feststoffen oder dergleichen aus feststoffbelastetem Abwasser.

Der Erfindung liegt die Aufgabe zugrunde, eine Abscheidevorrichtung zu schaffen, die eine effektive Entfernung von Feststoffen aus Abwasser oder dergleichen ermöglicht und zugleich eine Reinigung des Rechensiebes ohne der Gefahr einer Verklemmung zwischen dem Rechensieb und dem Reinigungskamm durchführen läßt.

Das Rechensieb der Abscheidevorrichtung ist vorteilhafterweise derart konstruiert, daß eine variable Breite zwischen den das Rechensieb bildenden Lamellen möglich und die Einsatzfähigkeit der Abscheidevorrichtung in großem Umfange varierbar ist. Die Spaltbreite zwischen den das Rechensieb ergebenden Lamellen liegt vorzugsweise im Bereich von 3 mm bis 10 mm, während die Breite des Rechensiebs vorzugsweise im Bereich von 30 cm bis 100 cm liegt.

Die Ausbildung der Lamellen ermöglicht eine Selbstreinigung des Rechensiebes während des Betriebs. Durch die verjüngend ausgebildete Form der Lamellen wird ein Verklemmen effektiv zwischen den Lamellen und dem Reinigungskamm verhindert und eine Entfernung von im Rechensieb haftenden Partikeln auf einfache Weise sichergestellt.

Mit der Reinigungsvorrichtung lassen sich auf optimale Weise Textilien, Plastik und Papier, Gummiabfälle, Lebensmittelabfälle, Algen sowie auch Haushaltsabfälle, Sand und Stein und Industrieabfälle aus Kläranlagen zurückführen.

Im folgenden wird eine bevorzugte Ausführungsform der Abscheidevorrichtung anhand der Zeichnungen beschrieben. Es zeigen:

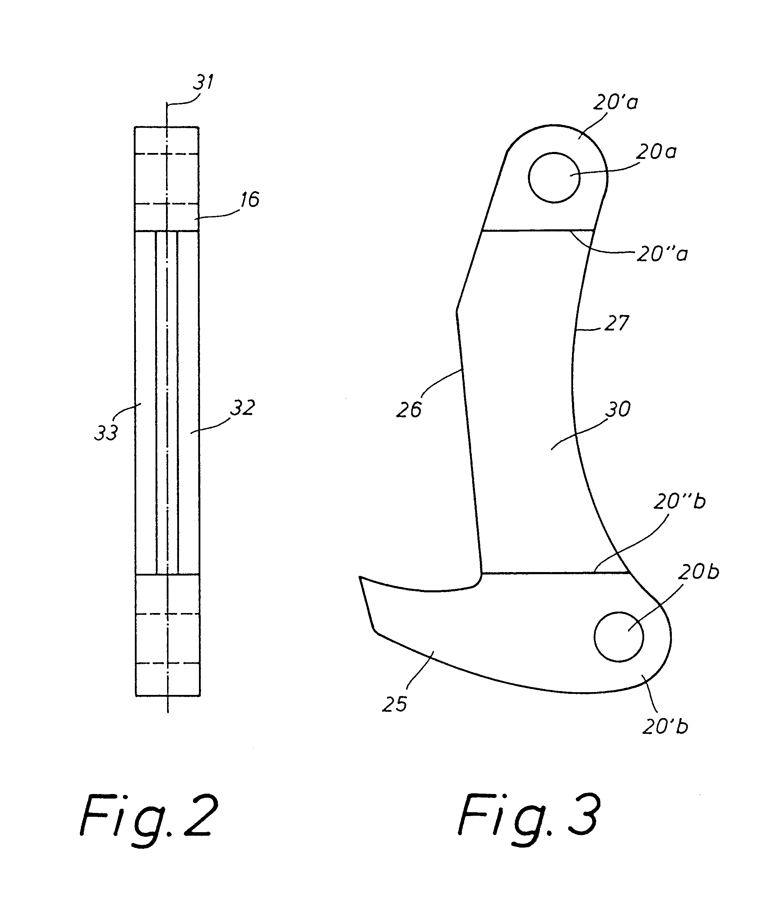

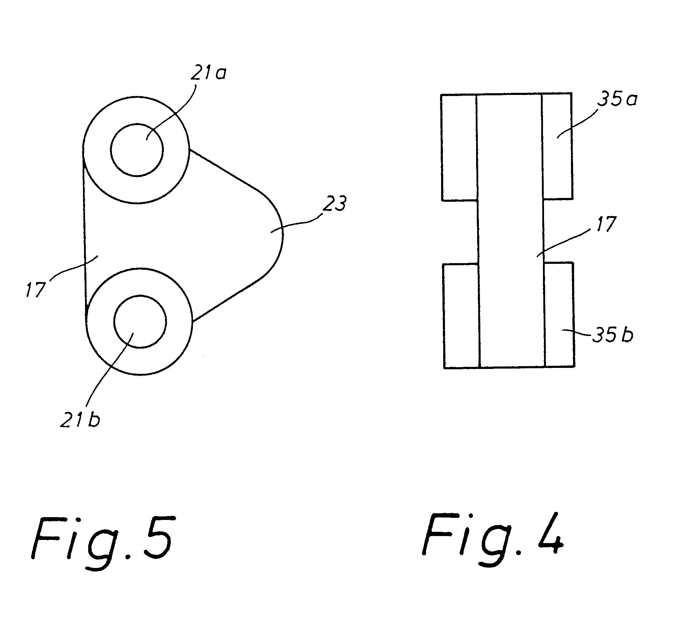

Figur 1
eine perspektivische Darstellung einer Abscheidevorrichtung,
Figur 2
eine in stark vergrößertem Maßstab dargestellte Rückseitenansicht einer Lamelle,
Figur 3
eine Seitenansicht der Lamelle nach Figur 2,
Figur 4
eine Aufsicht auf ein Verbindungsglied,
Figur 5
eine Seitenansicht auf ein Verbindungsglied entsprechend Figur 4,
Figur 6
eine Aufsicht auf einen Teil des Rechensiebes,
Figur 7
Seitenansicht eines Kettenrades,
Figur 8
eine Darstellung zur Erläuterung der Zusammenwirkung zwischen Reinigungskamm und Reinigungssieb, und
Figur 9a und Figur 9b
Darstellungen zur Erläuterung eines Abstandselementes für den Reinigungskamm.

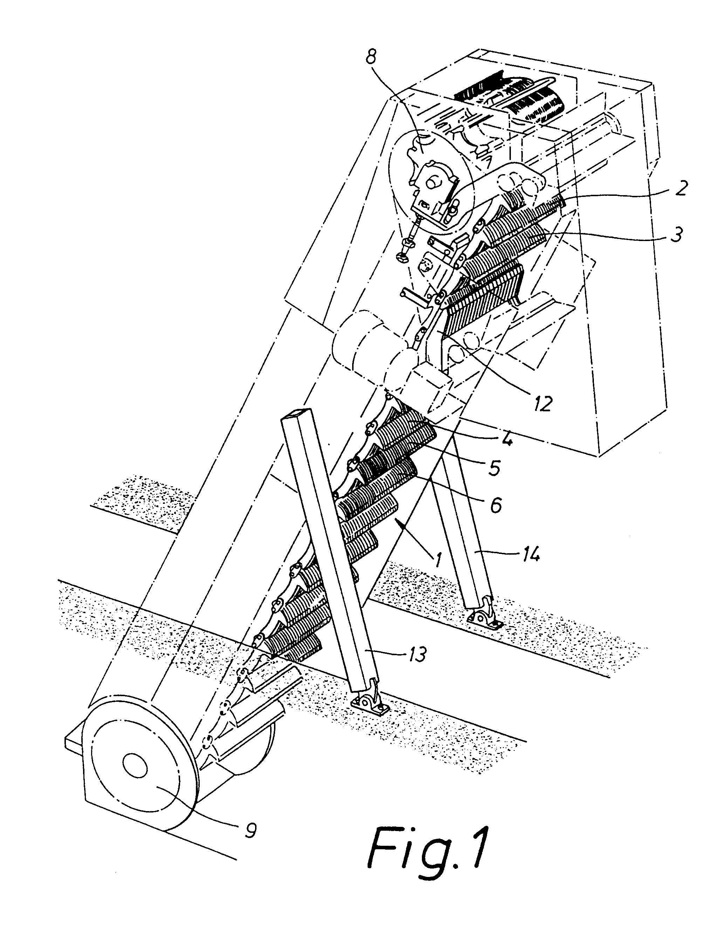

Nachfolgend wird unter Bezugnahme auf Figur 1 eine Abscheidevorrichtung hinsichtlich ihres generellen Aufbaus erläutert. Die Abscheidevorrichtung weist ein umlaufendes Rechensieb 1 auf, das aus einer Vielzahl von kettenförmig miteinander verbundenen, hintereinander geschalteten Rechensiebpartien besteht, die in Figur 1 nur teilweise dargestellt und mit 2, 3, 4 usw. bezeichnet sind. Das aus diesen Rechensiebpartien 2, 3, 4 usw. bestehende Rechensieb ist, vergleichbar mit einem Transportband, um eine obere und eine untere Umlenkung verlaufend angeordnet, wobei die Umlenkungen nur schematisch dargestellt sind und mit 8 und 9 bezeichnet sind. Bei der dargestellten Ausführungsform bestehen die Umlenkungen 8, 9 jeweils aus Kettenrädern. Die Kettenräder sind bei der beschriebenen Ausführungsform unter dem Rechensieb und in Eingriff mit einem Teil des Rechensiebes angeordnet.

Die obere Umlenkung 8 steht mit einer nicht gezeigten Antriebseinheit, beispielsweise in Form eines Elektromotors, in Antriebsbeziehung. Damit läßt sich das Rechensieb 1 in Figur 1 im Uhrzeigersinn nach Art eines Transportbandes bewegen, wobei die untere Umlenkung 9 mit einem entsprechenden Teil des Rechensieb 1 in einen Abwasserkanal oder dergleichen hineinreicht, aus welchen Feststoffe zu entfernen sind. Die Feststoffe werden auf der in Figur 1 nicht gezeigten vorderen Seite der Abscheidevorrichtung mittels des Rechensiebes hochtransportiert und werden nach ihrem Transport über die obere Umlenkung 8 vom Rechensieb 1 in ein bereitstehendes Behältnis oder dergleichen abgeworfen. Unterhalb und in Transportrichtung hinter der oberen Umlenkung 8 befindet sich in vorgegebenem Abstand zur Umlenkung 8 ein Reinigungskamm 12, der mit dem Rechensieb 1 in Eingriff steht bzw. mit dem Rechensieb 1 kämmt. Das Rechensieb 1 wird durch das Passieren des Reinigungskammes 12 zumindest weitgehend von in das Rechensieb 1 eingedrückten und/oder auf Lamellen haftenden Partikeln gereinigt und die auf diese Weise entfernten Partikel fallen ebenfalls in das unterhalb der Umlenkeinrichtung 8 befindliche Behältnis. Die am Reinigungskamm 12 vorbeigelaufenen Partien 2, 3, usw. des Rechensieb 1 sind damit zumindest weitgehend von Feststoffpartikeln befreit und stehen bereit, aufgrund ihres Eintrittes in den Abwasserkanal weitere Feststoffpartikel aufzunehmen und nach oben in Richtung auf die obere Umlenkung 8 zu transportieren.

Um die Abscheidevorrichtung in der in Figur 1 gezeigten Schräglage zu erhalten, sind beispielsweise seitlich der Abscheidevorrichtung jeweils eine Stütze 13, 14 vorgesehen.

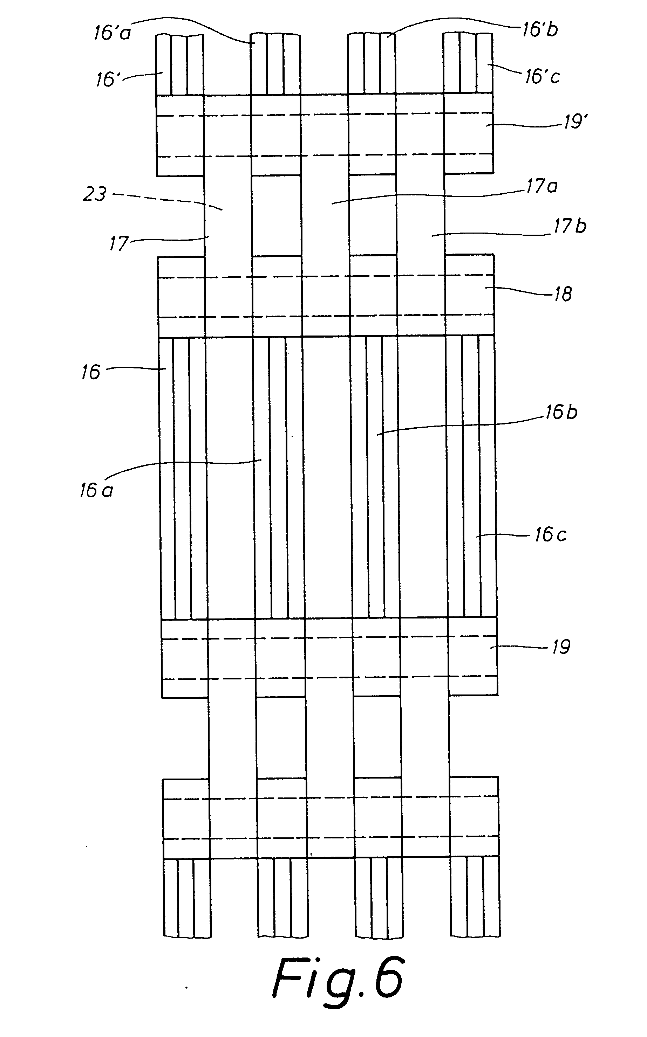

Das endlose bzw. umlaufende Rechensieb 1 besteht aus eine Vielzahl von Rechensiebpartien, wobei jede Partie 2, 3, usw. ihrerseits bei der dargestellten Ausführungsform entsprechend den Figuren 2 bis 6 aus einzelnen Lamellen 16 und dazwischen befindlichen Abstandselementen 17 zusammengesetzt ist. Nach Figur 6 ist pro Partie jeweils ein Paar von Gelenkstiften oder Gelenkbolzen 18, 19 vorgesehen, von denen beispielsweise der Gelenkbolzen 18 durch eine obere Öffnung 20 sämtlicher parallel zueinanderliegender Lamellen 16 und durch eine Öffnung 21 von ebenfalls parallel zueinanderliegend angeordneter Abstandselementen 17 durchgesteckt ist, so daß sich entlang der Achse des Gelenkbolzens 18 eine Lamelle 16 und ein Abstandselement 17 in sich wiederholender Folge abwechseln. Damit ist zwischen jeweils einem Paar von Lamellen 16 ein Abstandselement 17 liegend vorgesehen, das gemäß Figur 6 als kettenförmiges Verbindungsglied zur folgenden Partie führt und dort ebenfalls zwischen jeweils einem Paar von Lamellen liegend angeordnet ist.

Bei dem in Figur 6 gezeigten Ausführungsbeispiel sind auf dem Gelenkbolzen 18 von links gesehen die Lamelle 16, Abstandselement 17, Lamelle 16a, Abstandselement 17a, Lamelle 16b, Abstandselement 17b, Lamelle 16c angeordnet. Auf dem darüber befindlichen Gelenkbolzen 19' ist gelenkig gelagert eine Lamelle 16', Abstandselement 17, Lamelle 16'a, Abstandselement 17a, Lamelle 16'b, Abstandselement 17b, Lamelle 16'c. Die Abstandselemente 17, 17a, 17b stellen dabei die Verbindungsglieder zwischen den benachbarten bzw. aufeinanderfolgend angeordneten Rechenpartien dar.

Um das Rechensieb 1 in eine Umlaufbewegung zu bringen, ist an den Abstandselementen 17, 17a usw. jeweils ein Mitnehmerzapfen 23 ausgebildet, der vorzugsweise aus der Ebene des Abstandselementes 17 wegstrebend verläuft und in einer zur Transportebene senkrechten Richtung entgegengesetzt zu den noch zu erläuternden Hakenabschnitten 25 der Lamellen 16 weist, um mit den Kettenrädern der Umlenkungen 8, 9 zu kämmen. Anstelle des in Figur 4 und 5 gezeigten Abstandselementes 17 können zumindest teilweise kettenförmige Glieder benutzt werden, die den Mitnehmerzapfen 23 nicht aufweisen. Bei einer solchen Ausführungsform sind zumindest in dem Bereich des Transportsiebes bzw. Siebrechens 1, der über die Kettenräder der Umlenkungen 8, 9 bewegt wird, Abstandselemente 17 der in Figur 4 beschriebenen Art vorgesehen, wodurch eine Antriebsverbindung mit der als Antrieb dienenden Umlenkung 8 gewährleistet ist.

Ein wesentliches Merkmal der beschriebenen Abscheidevorrichtung besteht in der Ausbildung bzw. Formgebung der Lamellen 16. Wie Figur 2 zeigt, haben alle Lamellen 16 eine im wesentlichen hakenförmige Gestalt und weisen eine vordere, d. h. bezüglich der Abscheidevorrichtung nach außen weisende Stirnkante 26 und eine rückwärtige Stirnkante 27 auf. Zur Aufnahme der Gelenkbolzen 18, 19 sind in jeder Lamelle 16 eine obere Öffnung 20a und eine untere Öffnung 20b vorgesehen, zwischen welchen die Lamelle vorzugsweise leicht bogenförmigen Verlauf hat. Die Stärke der Lamelle 16 nimmt von der vorderen Stirnkante 26 in Richtung auf die hintere Stirnkante 27 ab, so daß zwischen den die Öffnungen 20a, 20b beinhaltenden Lamellenabschnitten 20'a, 20'b eine Verjüngung der Lamellen über die Länge des mit 30 bezeichneten Lamellenabschnittes definiert ist. Bei einer bevorzugten Ausführungsform beträgt die Stärke der Lamelle im Bereich der Stirnkante 27 etwa 70 % gegenüber der Stärke der vorderen Stirnkante 26, so daß sich eine durch einen Winkel von etwa 1° definierte Verjüngung ergibt.

Die Lamellen 16 bestehen vorzugsweise aus Kunststoff. Gegenüber ihrer Mittelebene 31 (Figur 2) sind die Seitenwände 32, 33 jeder Lamelle 16 spiegelsymmetrisch verlaufend ausgebildet, so daß gegenüber dem Abschnitten 20'a, 20'b, die zueinander parallele Seitenwände haben, Einschnitte in Form kleiner Stufen 20''a, 20''b vorliegen.

Wie aus der Darstellung nach Figur 3 ersichtlich ist, ist dagegen die Stärke der Lamellen 16 im Bereich der Abschnitte 20'a, 20'b durchgehend gleich, d. h. daß dort die Lamelle 16 die der Stirnkante 26 entsprechende Stärke aufweist und dadurch eine plane Anlage zu den benachbarten Abstandselementen 17 gewährleistet ist. Der mit 25 bezeichnete Hakenabschnitt der Lamelle 16 steht von der Stirnkante 26 in zur Stirnkante 27 entgegengesetzter Richtung ab und dient in der beschriebenen Weise zum Aufnehmen von Feststoffpartikeln.

Die Abstandselemente 17 haben vorzugsweise die gleiche Stärke wie die Lamellen 16 im Bereich der Öffnungen 20a, 20b bzw. der Stirnkante 26 und legen den Abstand zwischen benachbarten Lamellen 16 jeder Partie 2, 3, usw. fest. Wenn der Abstand zwischen den benachbarten bzw. parallel zueinander angeordneten Lamellen 16 größer sein soll als vorstehend beschrieben, werden Abstandselemente 17 verwendet, die im Bereich der Öffnungen 21a, 21b ringförmige Flansche 35a, 35b tragen oder zumindest im Bereich der Öffnungen 21a, 21b ringförmige Verbreiterungen aufweisen.

Die beiden Öffnungen 21a, 21b jedes Abstandselements 17 entsprechen in Größe und Form den Öffnungen 20a, 20b der Lamellen 16. Diese Öffnungen 21a, 21b haben der Abstandselemente 17 kreisförmige Gestalt und sind zur Aufnahme der Gelenkbolzen 18, 19 vorgesehen.

Durch die von der Stirnkante 26 in Richtung auf die Stirnkante 27 sich verjüngende Ausbildung des Lamellenabschnitts 30 jeder Lamelle 16 wird durch den in Figur 1 gezeigten Reinigungskamm 12 ein Eingriff der Reinigungskammzähne in die passierenden Rechensiebpartien und ein leichtes Ausstoßen von zwischen den Lamellen 16 steckenden Feststoffpartikeln in Richtung auf die Stirnkante 27 gewährleistet, ohne daß die Gefahr eines Verklemmens der Feststoffpartikel und/oder der Reinigungskammabschnitte zwischen den Lamellen 16 besteht. Die verjüngend ausgebildete Formgebung der Lamellen 16 trägt damit wesentlich bei zu einem ruhigen Lauf der Abscheidevorrichtung und zu einer einfachen, problemlosen Reinigung der Rechenpartien nach dem Passieren der oberen Umlenkung 8 und der Zurückbewegung in den Abwasserkanal. Die drehfähige Anordnung der Lamellen 16 einerseits und der Abstandselemente 17 andererseits auf den Gelenkbolzen 18, 19 garantiert die erforderliche Beweglichkeit des gesamten Rechensiebes 1, während die Abstandselemente 17 zumindest teilweise gleichzeitig als Gegenantriebselemente in Bezug auf den oder die Kettenräder der Umlenkung 8 dienen. Die Lamellen 16 haben bei einer Ausführungsform eine Gesamthöhe von ca. 13 cm, während der Hakenabschnitt 25 eine Gesamtlänge von ca. 7 cm aufweist.

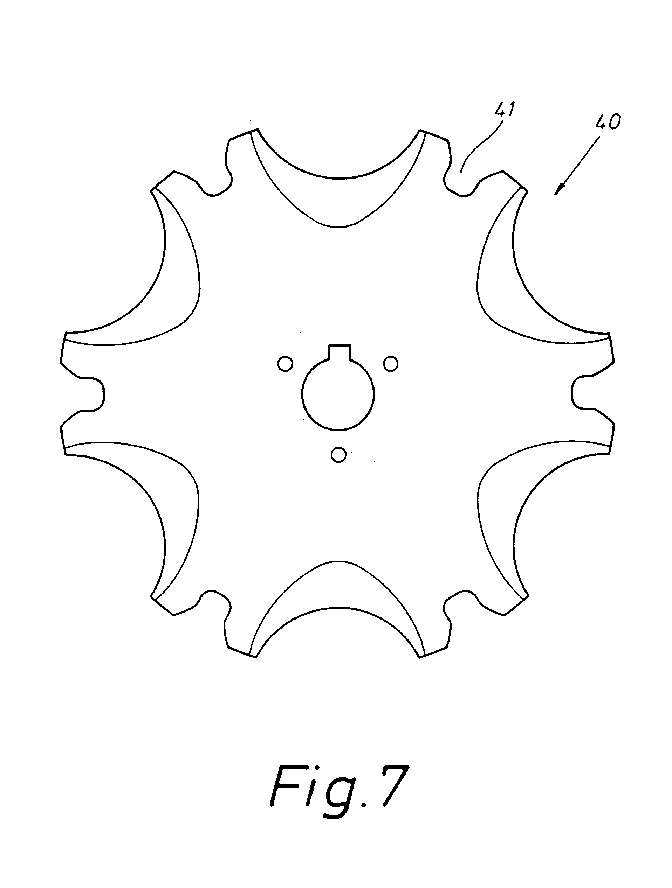

Figur 7 zeigt ein Kettenrad 40, das im Bereich der Umlenkung 8 zum Antrieb des Rechensiebes 1 dient. Dieses Kettenrad hat in Bezug auf die beschriebene Ausführungsform beispielsweise eine Breite von 60 mm, so daß zwischen dem Kettenrad 40 und beispielsweise 10 Reihen von parallel nebeneinanderliegenden Abstandselementen 17 ein Eingriff gewährleistet ist. Das Kettenrad 40 weist Vertiefungen 41 auf, in welche die Mitnehmerzapfen 23 der Abstandselemente 17 eintreten. Der Winkel zwischen benachbarten Vertiefungen 41 ist etwas größer als der Winkel zwischen den beiden Öffnungen 20a, 20b der Lamellen 16 in Bezug auf die Welle des Kettenrades 40 gewählt, wodurch die Drehung des Kettenrades 40 auf die zwischen den Abstandselementen 17 liegenden Lamellen 16 abgestimmt ist.

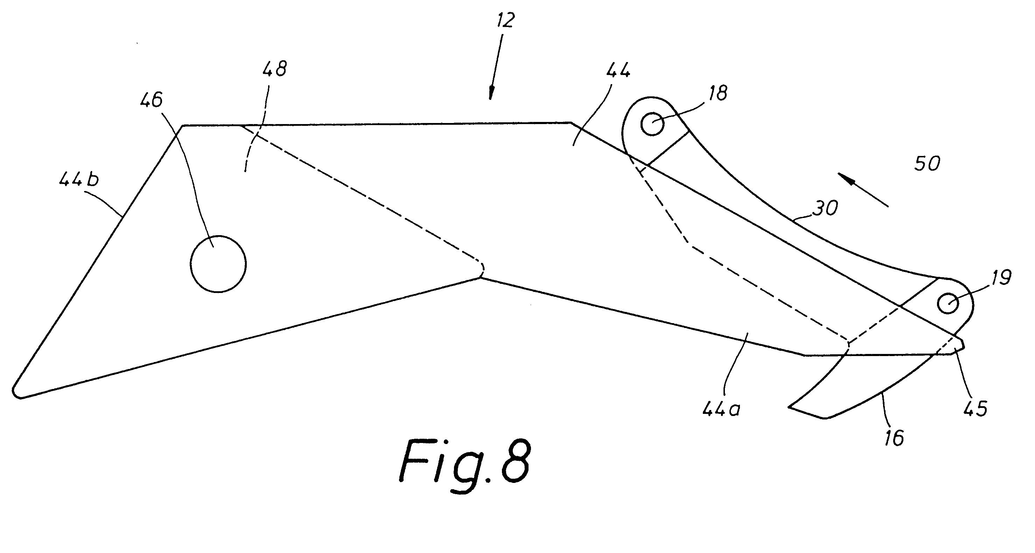

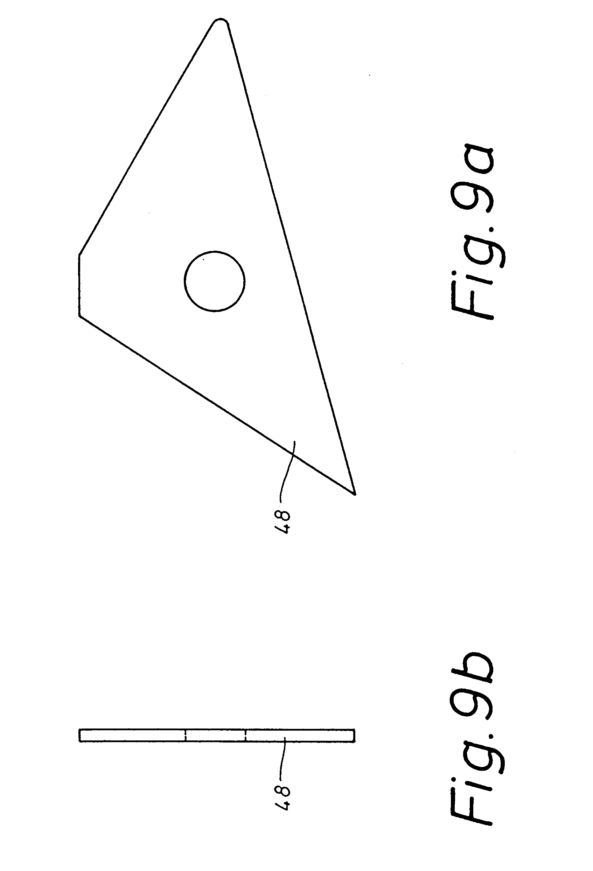

Die Figuren 8 und 9a, 9b zeigen Teile des Reinigungskammes 12, der mit dem Rechensieb 1 bzw. den Lamellen 16 jeder Rechensiebpartie kämmt. Vorzugsweise besteht der Reinigungskamm aus mehreren einzelnen und voneinander unabhängigen Kammeinheiten, was den Vorteil hat, daß bei einer Beschädigung von Zähnen des Reinigungskammes nicht der gesamte Reinigungskamm, sondern nur eine der den Reinigungskamm bildenden Einheiten zu ersetzen ist. Jede Einheit des Reinigungskammes 12 besteht aus mehreren Kammplatten 44 der in Figur 8 gezeigten Form. Die Platte 44 hat im wesentlichen umgekehrt V-förmige Gestalt und weist zwei Schenkel 44a und 44b auf, von welchen der Schenkel 44a einen zahnförmigen Abschnitt 45 bildet, der in den Spalt zwischen Lamellenpaaren eingreift. Die lagemäßige Zuordnung zwischen dem Schenkel 44a und den Lamellen 16 ist in Figur 8 veranschaulicht. Der Schenkel 44b dient der Fixierung der Kammplatte 44 und weist eine kreisförmige Öffnung 46 auf, die zur Aufnahme eines Halterungsbolzens oder dergleichen dient. Um die Kammplatten 44 in Abstand zueinander zu halten, die der Anordnung der Lamellen 16 mit den Abstandselementen 17 entspricht, sind Kamm-Abstandsplatten 48 vorgesehen, die weitgehend dreieckige Gestalt haben, wobei die Spitze des Dreiecks abgeflacht ist. Figur 8 zeigt die Lage der Abstandsplatten 48 gegenüber der benachbarten Kammplatte 44. Die Stärke der Kamm-Abstandsplatten 48 ist größer als die Stärke der Lamellen 16. Die Abstandsplatten 48 sind gleichfalls mit vorzugsweise kreisförmigen Öffnungen versehen, wodurch eine zueinander abwechselnde Anordnung von Kammplatten 44 und Kamm-Abstandsplatten 48 auf dem zugehörigen Halteringbolzen gewährleistet ist.

Aus Figur 8 ist erkennbar, daß der zahnförmige Abschnitt 45 nur über einen Teil der Breite des Schenkels 30 der Lamelle 16 eingreift, wodurch eine Bewegung an den ringförmigen Flanschen 35a, 35b vorbei während der durch den Pfeil 50 angedeuteten Bewegung der durch die Lamelle 16 in Figur 8 repräsentierten Rechensiebpartie an dem Reinigungskamm 12 gewährleistet ist.

Die bei der Abscheidevorrichtung verwendeten Rechensiebe haben eine bevorzugte Breite zwischen 300 mm und 1000 mm, wobei die Spaltbreite zwischen den einzelnen Lamellen 16 durch entsprechende Konzeption der Abstandselemente 17 vorzugsweise zwischen 3 mm und 10 mm liegen.

**Patentansprüche**

1. Abscheidevorrichtung, insbesondere für Kläranlagen, mit einem umlaufenden Rechensieb mit mehreren hintereinander geschalteten Rechensiebpartien, die jeweils bestehen aus nebeneinander angeordneten hakenförmigen Lamellen, wobei jede Lamelle einen von der vorderen Stirnkante abstehenden Hakenabschnitt aufweist,
dadurch gekennzeichnet,
daß die Stärke jeder Lamelle (16) von der vorderen Stirnkante (26) in Richtung auf die hintere Stirnkante (27) abnimmt.

2. Abscheidevorrichtung nach Anspruch 1, wobei jede Lamelle (16) eine obere und untere Öffnung (20a, 20b) zur Durchführung eines Gelenkstiftes, Gelenkbolzens oder dergleichen aufweist,
dadurch gekennzeichnet, daß die Stärke der Lamellen (16) im Bereich (20'a, 20'b) der Öffnungen (20a, 20b) über die Lamellenbreite konstant bzw. unveränderlich ist.

3. Abscheidevorrichtung nach Anspruch 1 oder 2, dadurch gekennzeichnet, daß zwischen jeweils zwei Paaren von Lamellen (16) zweier benachbarter Rechensiebpartien (2, 3 etc.) jeweils ein die beiden Lamellenpaare verbindendes Abstandselement (17) vorgesehen ist.

4. Abscheidevorrichtung nach einem der vorangehenden Ansprüche, dadurch gekennzeichnet, daß die Abstandselemente (17) wenigstens teilweise jeweils einen Mitnehmerzapfen (23) aufweisen.

5. Abscheidevorrichtung nach Anspruch 4, dadurch gekennzeichnet, daß der Mitnehmerzapfen (23) der Abstandselemente (17) in zum Hakenabschnitt (25) der Lamellen (16) entgegengesetzter Richtung weist.

6. Abscheidevorrichtung nach einem der vorangehenden Ansprüche, dadurch gekennzeichnet, daß jedes Abstandselement (17) im Bereich seiner Öffnungen (21a, 21b) ringförmige Flansche (35a, 35b) aufweist.

7. Abscheidevorrichtung nach einem der vorangehenden Ansprüche, mit einem Reinigungskamm (12), der von der vorderen Stirnkante (26) der Lamellen (16) in die Zwischenräume benachbarter Lamellen (16) jeder Rechensiebpartie eingreift,
dadurch gekennzeichnet, daß der Reinigungskamm (12) aus voneinander unabhängigen, nebeneinanderliegend angeordneten Kammeinheiten besteht.

8. Abscheidevorrichtung nach Anspruch 7, dadurch gekennzeichnet, daß jede Reinigungskammeinheit aus Kammplatten (44) mit mindestens einem vorspringenden, im wesentlichen spitzen Ende (45) und zwischen den Kammplatten angeordneten Abstandsplatten (48) besteht.

Fig.1

Fig.2

Fig.3

Fig. 5

Fig. 4

*Fig.6*

*Fig.7*

Fig.8

48

48

Fig.9b

Fig.9a

# EUROPÄISCHER RECHERCHENBERICHT

**EP 90 11 3227**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 922 024  (T. HAGIHARA)<br>* Anspruch 1; Figuren 1-8; Position 12 *<br>— — — | 1-3,6 | B 01 D 33/04<br>E 03 F 5/14 |
| A | DE-A-2 401 956  (T. HAGIHARA)<br>* Ansprüche 1,2,5; Figuren 1-6 *<br>— — — | 1-4,6 | |
| A | US-A-4 188 294  (T. HAGIHARA)<br>* Anspruch 1; Figuren 1-13,17-19,21-24 *<br>— — — | 1-3 | |
| A | US-A-4 597 864  (B.O. WIESEMANN)<br>* Anspruch 1; Figuren 1-4 *<br>— — — | 1 | |
| A | DE-A-3 715 020  (MASCHINENFABRIK HELLMUT GEI-GER)<br>* Anspruch 1; Figur *<br>— — — | 1 | |
| A | DE-C-628 980  (R. HAAS)<br>* Anspruch 1; Figuren 1-3 *<br>— — — | 1 | |
| A | CH-A-476 508  (H. GUJER)<br>* Anspruch 1; Figuren 1-4 *<br>— — — | 2,3 | **RECHERCHIERTE SACHGEBIETE (Int. Cl.5)** |
| A | DE-A-2 248 861  (MASCHINENFABRIK REIKA-WERK)<br>* Anspruch 1; Figuren 1,2,5-9,11 *<br>— — — — — | 7,8 | B 01 D 33/04<br>B 01 D 33/333<br>B 01 D 39/10<br>B 07 B 1/10<br>E 02 B 8/02<br>E 03 F 5/14 |

Der vorliegende Recherchenbericht wurde für alle Patentansprüche erstellt

| Recherchenort | Abschlußdatum der Recherche | Prüfer |
|---|---|---|
| Berlin | 01 März 91 | KUEHN P |